**Europäisches Patentamt**

**European Patent Office**

**Office européen des brevets**

(19)

(11) Veröffentlichungsnummer: **0 346 651**

**A2**

(12) # EUROPÄISCHE PATENTANMELDUNG

(21) Anmeldenummer: **89109204.1** .

(22) Anmeldetag: **22.05.89**

(51) Int. Cl.4: **B60J 5/04**

(30) Priorität: **14.06.88 CH 2280/88**

(43) Veröffentlichungstag der Anmeldung:
**20.12.89 Patentblatt 89/51**

(84) Benannte Vertragsstaaten:
**AT BE DE ES FR GB IT LU NL SE**

(71) Anmelder: **PEKI-ANHÄNGER-u.
KAROSSERIEBAU GMBH + CO. KG
Niederkircher Strasse 4
D-5500 Trier(DE)**

Anmelder: **Peters, Günter
Staumühler Strasse 280
D-4794 Hövelhof(DE)**

(72) Erfinder: **Peters, Günter
Staumühler Strasse 280
D-4794 Hövelhof(DE)**

(74) Vertreter: **Schönherr, Wolfgang et al
Patentanwälte Wolfgang Schönherr Dipl.-Ing.
Karl-Heinz Serwe Hawstrasse 28
D-5500 Trier(DE)**

(54) **Vorrichtung, insbesondere an einem Lastwagen.**

(57) Die Vorrichtung zum pneumatischen Verschliessen und/oder Abdichten von zwei relativ zueinander bewegbaren Teilen (6, 7) eines Lastwagenaufbaues umfasst ein sich über die ganze Länge eines Randbereiches (8) des einen Teiles (6) erstreckendes Verschluss- und/oder Abdichtprofil (10) sowie eine am anderen Teil (7) im zum einen Teil (6) benachbarten Randbereich (9) angeordnete Betätigungseinrichtung (11). Ein U-förmiges Profil (14) umfasst teilweise ein Betätigungsmittel (12). Ein elastischer Schlauch (13) befindet sich in einem innerhalb des U-förmigen Profiles (14) und des Betätigungsmittels (12) gebildeten Hohlraum. Durch Beaufschlagen des elastischen Schlauches (13) mit Druckluft aus einem Druckluftbehälter (17) über ein Steuermittel (18) und eine Zuführleitung (19) bewegt sich das Betätigungsmittel (12) zum Verschliessen und/oder Abdichten der beiden Teile (6, 7) gegen das Profil (10). Die Vorrichtung wird vorteilhafterweise an Lastwagen, die für die Zustellung von Frischwaren im Einsatz sind, verwendet.

## Vorrichtung, insbesondere an einem Lastwagen

Die vorliegende Erfindung betrifft eine Vorrichtung, insbesondere an einem Lastwagen, gemäss dem Oberbegriff des Patentanspruches 1.

Bei einem bekannten Lastwagen mit einer Ladepritsche und einem wenigstens aus Vorder-, Rück- und Seitenwänden bestehenden Aufbau sind die zu öffnenden und zu schliessenden Wandteile üblicherweise punktförmig mit benachbarten Wandteilen verriegelbar. Die punktförmige Verriegelung erfolgt dabei mittels mindestens einem am einen Wandteil vorhandenen Fanghaken, der mit einer am benachbarten Wandteil vorhandenen Spannvorrichtung in Eingriff bringbar und verriegelbar ist. Die zu öffnenden und zu schliessenden Wandteile sind mittels Scharnieren mit der Ladepritsche, dem Dach oder mit benachbarten Wandteilen verbunden und nach dem Entspannen der Spannvorrichtung ab- oder hochklappbar, bzw. seitwärts ausschwenkbar. Das Bedienen der Spannvorrichtungen erfolgt meistens manuell durch die Bedienperson.

Zum Transportieren von Frischwaren ist es wünschenswert, Lastwagenaufbauten staub- und/oder luftdicht abzudichten. In die Randbereiche der zu öffnenden und zu schliessenden Wandteile eingelegte Abdichtprofile aus einem elastischen Material wirken im geschlossenen Zustand des Aufbaus mit benachbarten Elementen des Aufbaues zusammen und sind für eine Abdichtung besorgt. Infolge der nur punktförmig vorhandenen Spannvorrichtungen sind auf diese Weise keine hundertprozentigen Abdichtwirkungen erzielbar.

Es ist die Aufgabe der vorliegenden Erfindung, durch eine neuartige Vorrichtung an einem Lastwagen zum Verschliessen und/oder Abdichten von zu öffnenden und zu schliessenden Wandteilen die vorgenannten Ausführungsformen wesentlich zu verbessern.

Der erfindungsgemässe Lastwagen ist durch die im kennzeichnenden Teil des Patentanspruches 1 angeführten Merkmale gekennzeichnet.

Weitere vorteilhafte Ausführungsformen der erfindungsgemässen Vorrichtung sind in den Unteransprüchen enthalten.

Die erfindungsgemässe Vorrichtung ist nicht nur zum Ausrüsten von neuen Lastwagen bestens geeignet sondern insbesondere auch zum Nachrüsten an bestehenden Lastwagenaufbauten.

Im folgenden sind mit Bezug auf die Zeichnungen mehrere Ausführungsbeispiele der erfindungsgemässen Vorrichtung näher erläutert. Die Zeichnungen zeigen

Fig. 1 eine perspektivische Darstellung eines Lastkraftwagens mit geschlossenem Aufbau,

Fig. 2 einen Querschnitt durch eine erste Ausführungsform einer Vorrichtung zum Verschliessen und Abdichten, im geschlossenen Zustand dargestellt,

Fig. 3 gemäss Fig. 2, im geöffneten Zustand dargestellt,

Fig. 4 gemäss Fig. 2, eine zweite Ausführungsform, im geöffneten Zustand dargestellt,

Fig. 5 - 8 einen Querschnitt durch eine dritte Ausführungsform einer Vorrichtung zum Verschliessen und/oder Abdichten mit verschiedenen lösbar anordbaren Leisten,

Fig. 9 gemäss Fig. 2, eine vierte Ausführungsform, im geöffneten Zustand dargestellt, und

Fig. 10 einen Querschnitt durch eine lediglich zum Abdichten bestimmte fünfte Ausführungsform im nicht abdichtenden Zustand dargestellt.

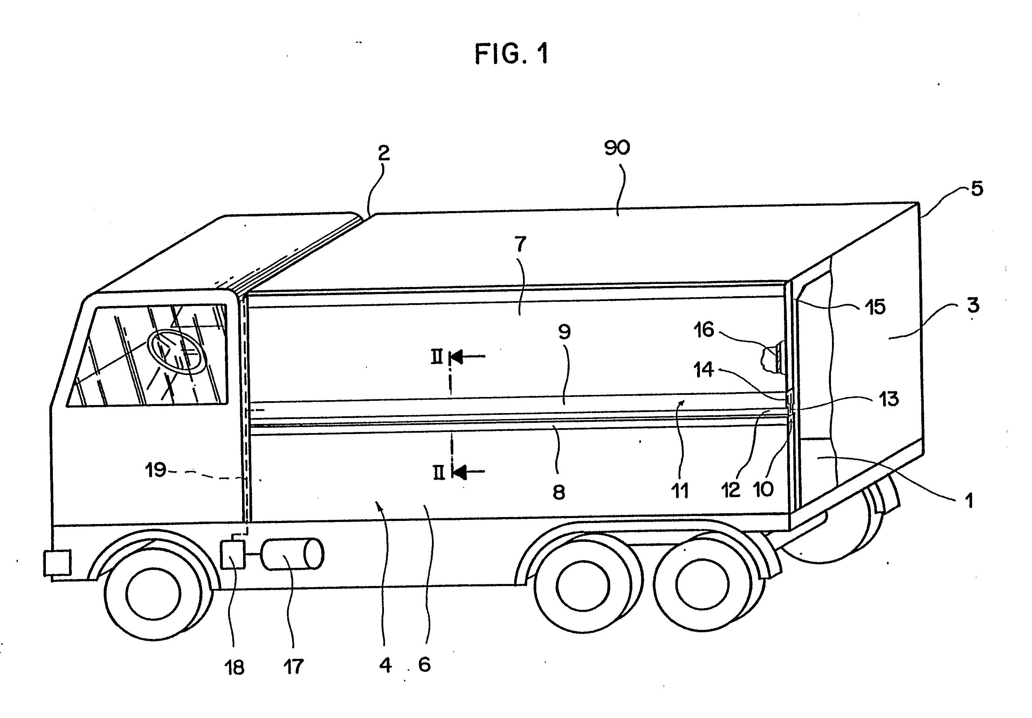

In der Fig. 1 ist ein Lastkraftwagen mit einer Ladepritsche 1 und einem Aufbau, welcher eine Vorderwand 2, eine Rückwand 3, je eine Seitenwand 4, 5 und ein Dach 90 umfasst, gezeigt. In jeder Ecke des Aufbaus des Lastkrafktwagens ist ein nur einmal dargestelltes Ecksäulenprofil 15 vorhanden.

Die erfindungsgemässe Vorrichtung zum pneumatischen Verschliessen und/oder Abdichten von zwei benachbarten, sich relativ zueinander bewegbaren Teilen eines Lastwagenaufbaus ist anhand der zu öffnenden und zu schliessenden Seitenwand 4 die parallel zur Längsachse des Lastkraftwagens in einen Teil 6 und einen anderen Teil 7 unterteilt ist, näher erläutert. Es sei an dieser Stelle vermerkt, dass die Vorrichtung ebensogut an den Aussenseiten des Daches 90, der Ladepritsche 1 oder in den Ecksäulen 15 anordbar ist, um Wandelemente 3, 4, 5 fest miteinander zu verbinden.

Auf der Stirnseite des oberen Randbereiches 8 des einen Teiles 6 ist ein sich über die ganze Länge erstreckendes Verschluss- und Abdichtprofil 10 angeordnet. Auf der Stirnseite des unteren Randbereiches 9 des benachbarten anderen Teiles 7 der Seitenwand 4 ist eine sich über die ganze Länge des anderen Teiles 7 erstrekkende und dem genannten Profil 10 zugewandte Betätigungseinrichtung 11 befestigt. Diese enthält ein mit dem anderen Wandteil 7 verbundenes, in seinem Querschnitt im wesentlichen U-förmiges Profil 14, das mit seinen dem Profil 10 zugewandten Schenkeln ein Betätigungsmittel 12 teilweise umfasst. Letzteres weist einen ebenfalls im wesentlichen U-förmigen Querschnitt auf und ist zwischen den Schenkeln des U-förmigen Profiles 14 quer zur Längsrichtung der Betätigungseinrichtung 11 in Richtung des Verschluss- und Abdichtprofiles 10 bewegbar.

Ein dehnbares Element 13, das sich im wesentlichen über die ganze Länge der Betätigungseinrichtung erstreckt, ist im Hohlraum der durch das im Querschnitt U-förmige Betätigungsmittel 12 und den dieses teilweise umfassenden Schenkel des U-förmigen Profiles 14 gebildet ist, angeordnet. Das dehnbare Element 13 besteht vorzugsweise aus einem elastischen Schlauch, beispielsweise einem Gummischlauch oder einem Schlauch aus einem thermoplastischen Kunststoff. Jedes der Enden des dehnbaren Elementes 13 ist mit einer in den Figuren nicht dargestellten Einrichtung zum Abschliessen und/oder zum Ankoppeln einer Zuführleitung 19 vorgesehen. Diese ist über ein Steuermittel 18 mit einer Druckgasquelle 17, vorzugsweise mit dem Druckgasbehälter des Lastkraftwagens verbunden. Das Steuermittel 18 führt zum Verschliessen der beiden Teile 6, 7 der Seitenwand 4, dem dehnbaren Element 13 über die Zuführleitung 19 Druckluft dosiert zuführt. Das dehnbare Element 13 dehnt sich unter der Wirkung der Druckluft in der einzig möglichen Ausdehnrichtung, in Richtung zum Verschluss-und Abdichtprofil 10 unter Mitnahme des Betätigungsmittels 12 aus. Letzteres ist auf seiner dem U-förmigen Profil 14 abgewandten Seite, wie weiter hinten anhand der verschiedenen Ausführungsbeispiele erklärt, so ausgebildet, dass es mit dem Verschluss- und Abdichtprofil 10 in Eingriff gelangt. Dadurch sind die beiden Teile 6, 7 miteinander verriegelt. Da die beiden Teile 6, 7 der Seitenwand 4 entweder abklappbar, hochklappbar oder relativ zueinander verschiebbar sind, ist es notwendig, dass die Zuführleitung 19 so ausgeführt ist, dass sie der Bewegungsbahn des unteren Randbereiches 9 des anderen Teiles 7 zu folgen vermag. Dies ist aus der Figur 1 nicht ersichtlich, da dort die Zuführleitung 19 nur schematisch angedeutet ist. Eine dosierte oder stufenweise Beaufschlagung des dehnbaren Elementes 13 mit Druckluft durch das Steuermittel 18 ist deshalb notwendig, dass auf der ganzen Länge der Betätigungseinrichtung 11 ein gleichmässiger, an allen Orten gleichzeitig einsetzender Schliessvorgang erhalten wird. Das Steuermittel 18 ist so ausgebildet, dass es dazu beispielsweise in einer ersten Phase einen Ueberdruck von 1/2 bar freigibt, wartet bis das dehnbare Element 13 gefüllt ist, nach einer gewissen Zeit auf eine nächste Stufe schaltet, die beispielsweise einen Ueberdruck von 1 bar freigibt, wieder wartet, bis das dehnbare Element gefüllt ist usw., bis der eingestellte Enddruck erreicht ist. Um Kosten einzusparen ist vorgesehen, alle am Lastkraftwagen vorhandenen Vorrichtungen zum Verschliessen und/oder Abdichten an ein einziges Steuermittel anzuschliessen. Die einzelnen Vorrichtungen sind zu diesem Zweck zueinander entweder parallel- oder serieschaltbar.

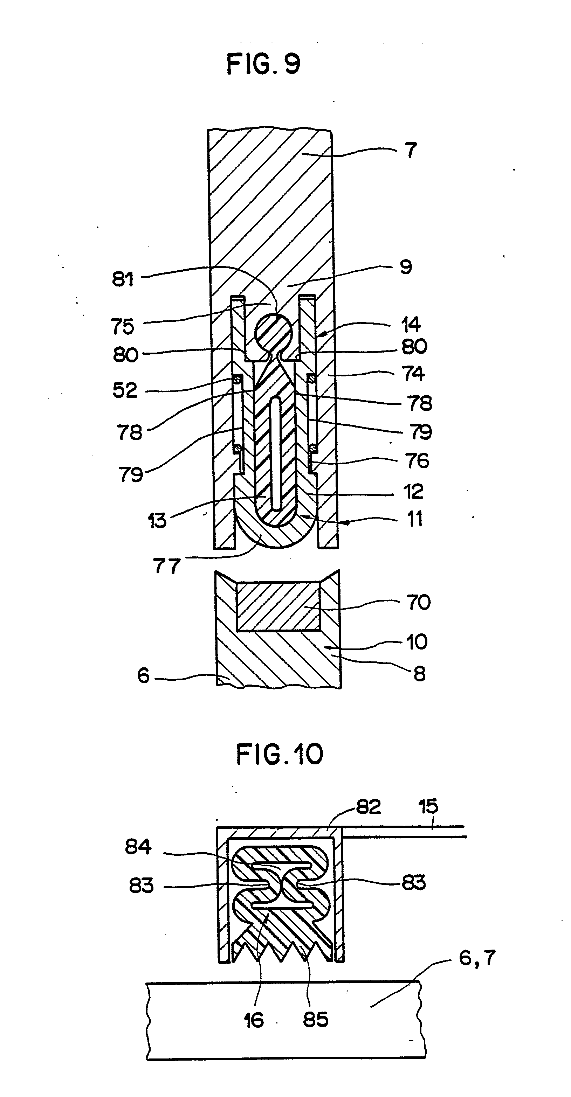

Lediglich zum Abdichten ist im Ecksäulenprofil 15 ein elastischer Schlauch 16 eingelegt, der, in der Figur 1 nicht dargestellt, über eine weitere Zuführleitung mit dem Steuermittel 18 verbunden ist. Beim Beaufschlagen des Schlauches 16 mit Druckluft, drückt dieser infolge seiner Ausdehnung gegen je einen Teilbereich der Seitenwandflächen der beiden Teile 6, 7. Eine Vorrichtung lediglich zum Abdichten ist weiter hinten anhand der Fig. 10 beschrieben.

Das Steuermittel 18 ermöglicht zum Entriegeln bzw. zum Oeffnen der Seitenwand 4 in einer zweiten Arbeitsstellung ein dosiertes Ablassen der im dehnbaren Elemente 13 und im elastischen Schlauch 16 vorhandenen Druckluft.

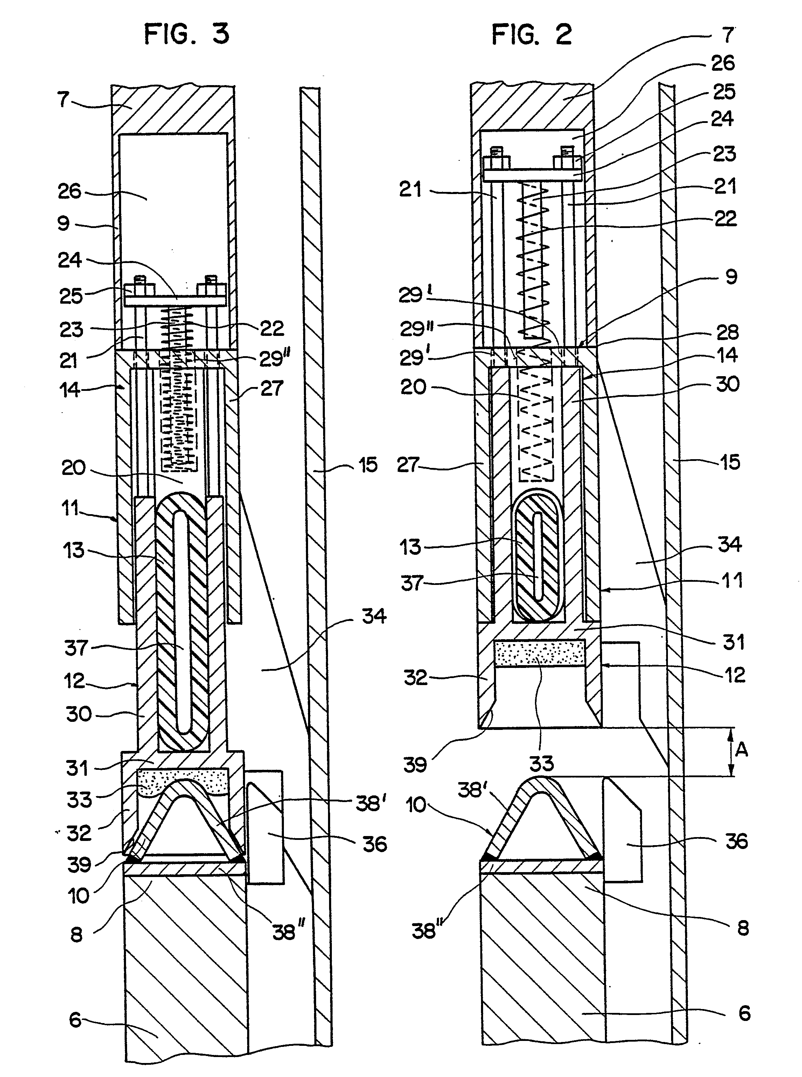

Anhand von Querschnitten entlang der Linie II-II in der Fig. 1 sind in den Fig. 2 bis 9 verschiedene Ausführungsformen von Vorrichtungen zum Verschliessen und Abdichten im Detail beschrieben.

Die Fig. 2 und 3 zeigen eine erste Ausführungsform der genannten Vorrichtung, wobei in der Fig. 2 der geöffnete Zustand und in der Fig. 3 der geschlossene Zustand dargestellt sind. Unten in den beiden Figuren sind je ein Teilbereich des einen Teiles 6 mit dem oberen Randbereich 8 dargestellt. Auf der Stirnfläche dieses einen Teiles 6 ist das Verschluss- und Abdichtprofil 10 angeordnet. Dieses besteht aus einem V-förmig gebogenen ersten Flachprofil 38', dessen beiden Schenkelenden mit einem zweiten Flachprofil 38" verbunden, beispielsweise verschweisst sind. Die Betätigungseinrichtung 11 ist auf der Stirnfläche des unteren Randbereiches 9 des anderen Teiles 7 angeordnet. Im nicht geschlossenen Zustand gemäss Fig. 2 ist zwischen dem unteren Ende der Betätigungseinrichtung 11 und dem oberen Ende des Verschluss- und Abdichtprofiles 10 ein Abstand A von vorzugsweise 10 - 20 mm vorhanden.

Das U-förmige Profil 14, das in den Fig. 2 und 3 auf nicht dargestellte Art mit dem anderen Wandteil 7 verbunden ist, weist zwei äussere Schenkel 27, die mit den Aussenflächen des anderen Wandteiles 7 fluchtend angeordnet sind, und einen zentralen Schenkel 20 auf. Letzterer ist gegenüber den äusseren Schenkeln 27 verkürzt ausgeführt und sein dem Profil 10 zugewandtes Ende weist eine halbkreisförmige Nut auf. Die Basis 28 des U-förmigen Profiles 14 ist in seiner Längsrichtung in regelmässigen Abständen mit je drei quer zur Basis 28 angeordneten Bohrungen 29', 29" versehen. Die zentrale Bohrung 29" reicht als Sackloch bis in den Bereich des halbkreisförmigen Endes des zentralen Schenkels 20. Die äusseren Schenkel 27 umfassen teilweise das Betätigungsmittel 12, das in seinem Querschnitt im wesentlichen ebenfalls U-förmig ausgebildet ist und zwei nach oben weisende weitere Schenkel 30 enthält. Jeder der Schenkel 30 ragt in je einen durch die äusseren Schenkel 27 und den zentralen Schenkel 20 gebildeten Zwischenraum. Die beiden weiteren Schenkel 30 sind an ihrem oberen Ende in regelmässigen Abständen je mit einem Stab 21, vorzugsweise einem Gewindestab versehen. Jeder dieser Gewindestäbe ragt durch je eine der genannten Bohrungen 29' in eine Aussparung 26, die in regelmässigen Abständen im anderen Wandteil 7 angeordnet ist. An ihrem der Basis 28 abgewandten Ende sind je zwei in Querrichtung benachbarte Stäbe 21 mit einem Träger 24 und Muttern 25 untereinander verbunden. Der Träger 24 weist mittig einen der genannten Bohrung 29″ zugewandten Führungsbolzen 23 auf, der von einer Schraubenfeder 22 umgeben ist. Letztere steht mit ihrem einen Ende am genannten Träger 24 an und ragt mit ihrem anderen Ende in die genannte Bohrung 29″. Die in regelmässigen Abständen in Längsrichtung der Betätigungseinrichtung 11 vorhandenen Schraubenfedern 22 dienen dazu, das Betätigungsmittel 12 nach oben in das U-förmige Profil 14 zu ziehen und dort zu halten. Im Hohlraum 37 der durch den Grundsteg 31, die weiteren Schenkel 30 des Betätigungsmittels 12 sowie den zentralen Schenkel 20 des U-förmigen Profiles 14 gebildet ist, ist ein dehnbares Element 13, wie bereits erwähnt, vorzugsweise ein Gummischlauch, angeordnet. Das Betätigungsmittel 12 weist auf der den genannten weiteren Schenkeln 30 abgewandten Seite je zwei, in Richtung des Profiles 10 ragende äussere Stege 32 auf. Jedes Stegende ist mit einer nach innen abgeschrägten Fläche 39 versehen, deren Neigungswinkel denjenigen des V-förmig gebogenen ersten Flachprofiles 38' des Verschluss- und Abdichtprofiles 10 entsprechen. Zwischen den äusseren Stegen 32 ist ein sich über die ganze Länge des Betätigungsmittels 12 erstreckendes Gummiband 33 eingesetzt. Durch das Beaufschlagen des Gummischlauches 13, beispielsweise mit Druckluft, dehnt sich dieser unter Mitnahme des Betätigungsmittels 12 in Richtung des Verschluss- und Abdichtprofiles 10 aus. Die äusseren Stege 32 des Betätigungsmittels 12 umfassen das V-förmig ausgebildete Verschluss- und Abdichtprofil 10, dessen oberes Ende zum Erreichen einer Abdichtungswirkung in das elastische Band 33 drückt. Die beiden Stäbe 21 sind zusammen mit dem Betätigungsmittel 12 ebenfalls nach unten bewegt worden und der Führungsbolzen 23 ragt nun, die Schraubenfeder 22 zusammendrückend, in die Bohrung 29″. Alle in Längsrichtung der Betätigungseinrichtung 11 vorhandenen Schraubenfedern 22 sind vorbereitet, um nach dem Ablassen des Druckes im Gummischlauch 13 das Betätigungsmittel 12 in seine ursprüngliche Lage im U-förmigen Profil 14 zurückzudrücken.

In jedem der Ecksäulenprofile 15 ist je ein in Längsrichtung des einen Teiles 6 in etwa auf gleicher Höhe mit dem Profil 10 angeordneter Nocken 36 mit einem nach oben ragenden keilförmigen Abschluss angebracht. Jedes der Enden der Betätigungseinrichtung 11 ist mit einem Riegel 34 versehen, der eine zum Umfassen des Nockens 36 bestimmte Aussparung aufweist. Im geschlossenen Zustand, Fig. 3, werden durch den genannten Riegel 34 und den Nocken 36 die beiden Teile 6, 7 der Seitenwand 4 an jedem der Ecksäulenprofile 15 gehalten.

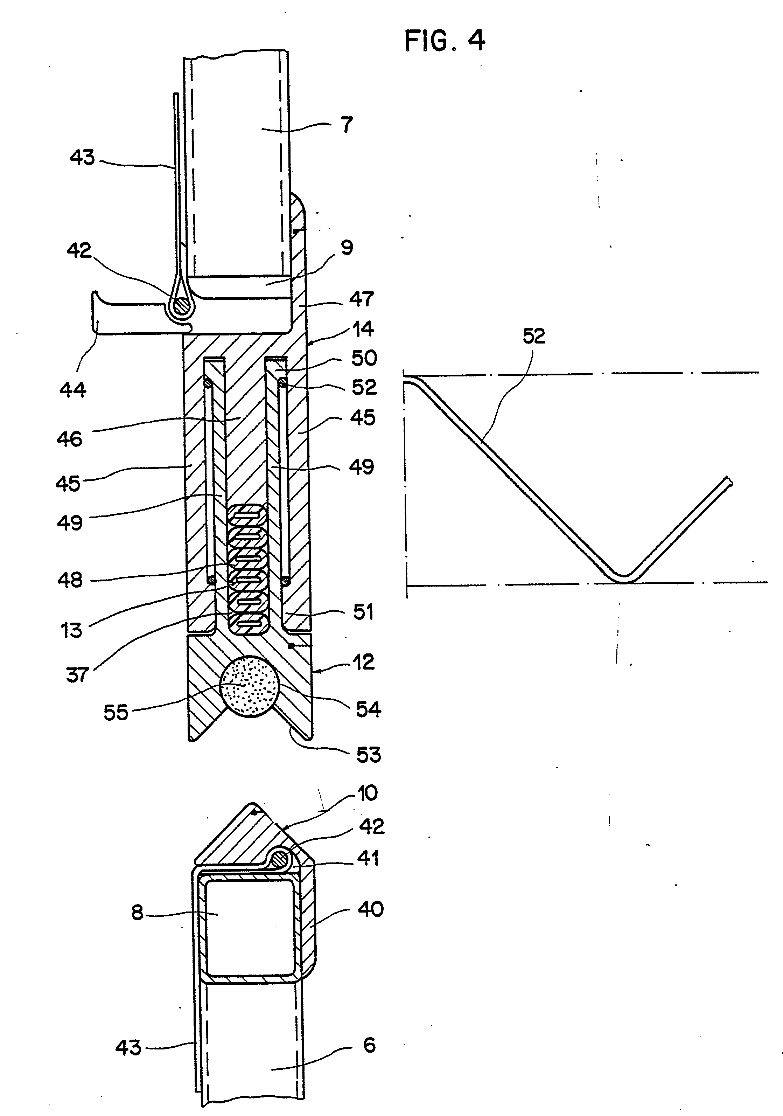

In der Fig. 4 ist eine zweite Ausführungsform der erfindungsgemässen Vorrichtung dargestellt. Der untere Teil 6 weist in seinem oberen Randbereich 8 ein in seinem Querschnitt rechteckförmiges Rohr auf. Das Verschluss-und Abdichtprofil 10 ist als Vollkörper mit im wesentlichen dreieckförmigem Querschnitt ausgeführt, wobei auf der einen Seite der Hypotenuse eine halbkreisförmige Aussparung 41 mit einer daran anschliessenden, rechtwinklig zur Hypotenuse angeordneten seitlichen Lasche 40 vorhanden sind. Eine an ihrem einen Ende um einen Rundstab 42 geschlaufte Plane 43 bespannt die Aussenseite des einen Teiles 6 der Seitenwand 4. Der sich längs des Profiles 10 erstreckende Rundstab 42 ist in der genannten Aussparung 41 festgehalten. Die seitliche Lasche 40 des Profiles 10 dient zum Befestigen, beispielsweise durch Verschrauben oder Vernieten des letzteren am rechteckförmigen Rohr des oberen Randbereiches 8.

Das U-förmige Profil 14 weist ebenfalls eine seitliche Lasche 47 auf, die zum Befestigen dieses Profiles im Randbereich 9 des anderen Teiles 7 bestimmt ist und an der inneren Seitenfläche des anderen Teiles anliegt. Zum Befestigen einer weiteren Plane 43, die zum Bespannen des anderen Teiles 7 vorgesehen ist, ist letztere ebenfalls um einen Rundstab 42 geschlauft. Dieser wird mit einem Keil 44 in einen Zwischenraum zwischen dem unteren Ende des anderen Teiles 7 und der Basis des U-förmigen Profiles 14 gepresst. Die beiden äusseren Schenkel 45 des U-förmigen Profiles 14 weisen dem Profil 10 zugewandte, nach innen verdickte Schenkelenden 51 auf. Die weiteren Schenkel 49 des Betätigungsmittels 12 sind mit, dem Profil 10 abgewandten, nach aussen ragenden verdickten Schenkeln 50 versehen. In je einem, zwischen einem der Schenkel 45 des U-förmigen Profils 14 und einem der weiteren Schenkel 49 des Betätigungsmittels 12 durch die Schenkelenden 50, 51 gebildeten Zwischenraum ist je ein Federmittel 52 eingesetzt. Das dehnbare Element 13 ist in dieser Ausführungsform durch mehrere übereinanderliegende, den Hohlraum 37 füllende, einzelne elastische Schläuche 48 gebildet. Durch die Anordnung mehrerer Schläuche wird die seitliche Reibung beim Schliessen der Vorrichtung gegenüber dem vorher beschriebenen Ausführungsbeispiel verringert.

Das Federmittel 52, das in diesem Ausführungsbeispiel ein elastischer Bügel ist, ist vorzugsweise aus Federstahl oder Federbronze hergestellt. Der elastische Bügel 52 wirkt mit dem U-förmigen Profil 14 und dem Betätigungsmittel 12 zusammen und hat die gleiche Aufgabe wie die Schraubenfeder 22 im vorher beschriebenen Ausführungsbeispiel. Das dem Profil 10 zugewandte Ende des Betätigungsmittels 12 weist eine V-förmige Nut, die komplemetär zur Dreiecksform des Verschluss- und Abdichtprofiles 10 angeordnet ist, auf. Im Zentrum der V-förmigen Nut 53 ist eine kreisförmige Aussparung 54 angebracht, in welche ein elastisches Seil 55, vorzugsweise ein Gummiseil, als Abdichtmittel eingesetzt ist.

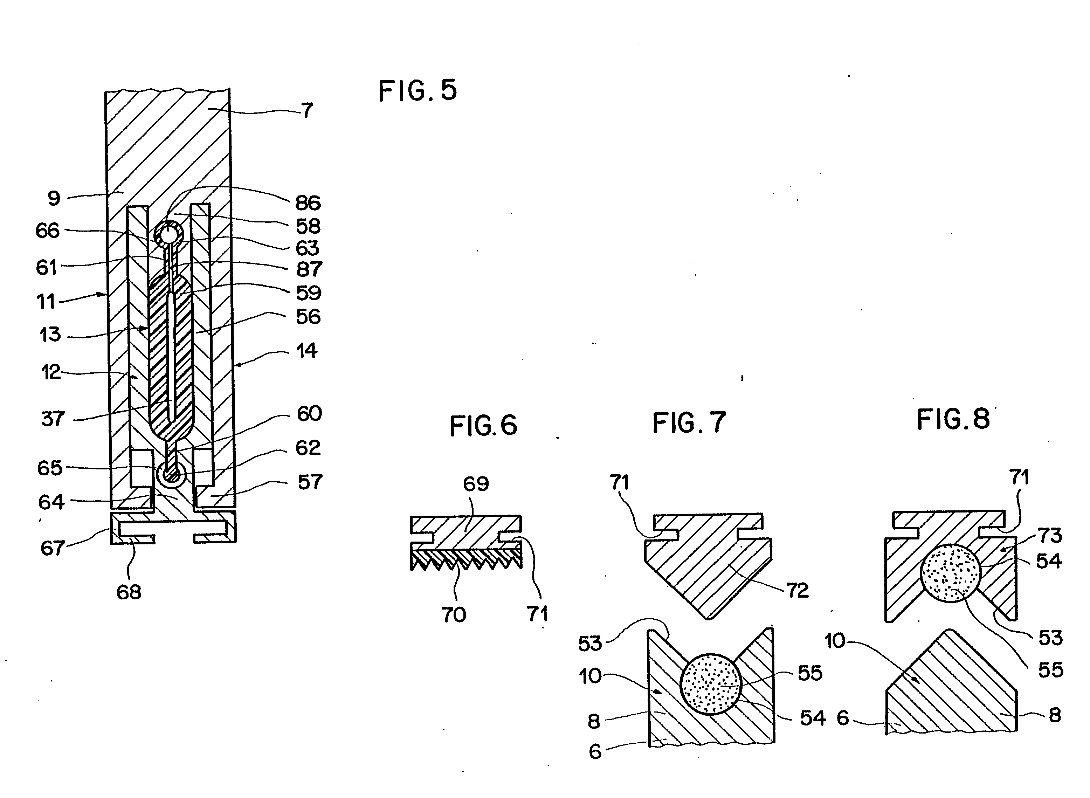

Eine dritte vorteilhafte Ausführungsform der erfindungsgemässen Vorrichtung ist in den Fig. 5 - 8 dargestellt. Das in der Betätigungseinrichtung 11 im Hohlraum 37 der durch den zentralen Schenkel 58 des U-förmigen Profiles 14 und die beiden Schenkel 56 des Betätigungsmittels 12 gebildet ist, angeordnete, dehnbare Element 13 umfasst einen elastischen Schlauch 59 mit je in Längs richtung abstehenden Laschen 60, 61. Jede dieser Laschen weist ein im Querschnitt kreisförmiges verdicktes Laschenende 62, 63 auf. Sowohl im zentralen Schenkel 58 des U-förmigen Profiles 14 als auch in einem Grundsteg 64 des Betätigungsmittels 12 sind der Form der Laschen 60, 61 komplementäre Aussparungen 65, 66 vorhanden. In dieser Ausführrungsform wirkt das dehnbare Element 13 zusätzlich als Federmittel zum Zurückziehen des Betätigungsmittels 12 in das U-förmige Profil 14 beim Oeffnungsvorgang der vorgängig verschlossenen Teile 6, 7. Eine Schraubfeder oder ein elastischer Bügel, wie in den vorherigen Ausführungsbeispielen, entfällt bei dieser Ausführungsform. Eine längs im verdickten Laschenende 63 vorhandene Oeffnung 86 mit wenigstens einem zum Innern des elastischen Schlauches 59 ragenden Kanal 87 dient der Druckluftzufuhr.

Da das verdickte Laschenende 63 beim Beaufschlagen des elastischen Schlauches 59 mit Druckluft in dieser Anordnung selbst nicht mitbewegt wird ist der Anschluss der Zuführleitung 19 besonders einfach zu gestalten.

Das dem Profil 10 zugewandte Ende des Betätigungsmittels 12 ist als U-förmiger Endteil 67 mit nach innen abgekröpften Schenkelenden 68 ausgebildet und mit dem Grundsteg 64 verbunden. Der U-förmige Endteil 67 dient zum Umfassen von Leisten 69, 72 und 73. Je nach Einsatzzweck der Vorrichtung ist eine der genannten Leisten mit dem U-förmigen Endteil 67 des Betätigungsmittels 12 lösbar zu verbinden Jede der genannten Leisten weist je zwei sich gegenüberliegende Nuten 71 auf, die zum Festhalten der Leiste mit den abgekröpften Schenkelenden 68 des Betätigungsmittels 12 in Eingriff bringbar sind. Die in der Fig. 6 dargestellte Leiste 69 dient nur als Abdichtleiste und weist auf der dem einen Wandteil 6 zugewandten Seite ein mit Zacken versehenes elastisches Band 70 auf. Die Fig. 7 und 8 zeigen im wesentlichen Leisten 72, 73 und Verschluss- und Abdichtprofile 10, die im Querschnitt eine zueinander komplementäre Form aufweisen. Die Ausführungsform gemäss Fig. 8 entspricht im Prinzip der Ausführungsform gemäss der Fig. 4 und bedarf keiner weiteren Erklärung. Die Fig. 7 unterscheidet sich von der Fig. 8 nur dadurch, dass jetzt das Verschluss- und Abdichtprofil die V-förmige Nut 53 mit der kreisförmigen Aussparung 54 und dem elastischen Seil 55 als Abdichtmittel aufweist und dass die im Betätigungsmittel 12 eingesetzte Leise 72 die zur V-förmigen Nut 53 komplementäre Dreieckform hat.

In der Fig. 9 ist eine besonders einfache, aus wenigen Einzelteilen bestehende Ausführungsform der erfindungsgemässen Vorrichtung dargestellt. Im oberen Randbereich 8 des einen Teiles 6 ist ein Verschluss- und Abdichtprofil 10 mit U-förmigem Querschnitt und nach innen abgeschrägten Schenkelenden angeordnet. Zwischen den Schenkeln ist ein elastisches Band 70 eingesetzt. Das am unteren Randbereich 9 des anderen Teiles 7 angeordnete, U-förmige Profil 14 weist je auf der Innenseite seiner äusseren Schenkel 74 einen Anschlag 76 auf. Das U-förmige Betätigungsmittel 12 hat eine halbkreisförmig gebogene Basis 77 mit zwei anschliessenden Schenkeln 78. Jeder der Schenkel 78 weist auf seiner Aussenseite, ungefähr mittig der Schenkelhöhe, je eine sich etwa über einen Drittel letzterer erstreckende Vertiefung 79 auf. Die Enden der Schenkel 78 sind längs ihrer Innenseite mit einem Absatz 80 versehen und zum Hineingreifen zwischen die äusseren Schenkel 74 und den kurzen zentralen Schenkel 75 des U-förmigen Profiles 14 ausgebildet. Der elastische Schlauch 13 ist, ähnlich wie vorgängig beschrieben, auf seiner dem anderen Teil 7 zugewandten Seite mit einer im wesentlichen kreisförmigen Lasche 81 verbunden, welche in eine komplementär geformte Aussparung im zentralen Schenkel 75 eingesetzt ist. Ein elastischer Bügel 52 ist in der Vertiefung 79 angeordnet und wirkt zwischen dem Schenkel 78 des Betätigungsmittels 12 und dem Anschlag 76 des U-förmigen Profiles 14. Im verschlossenen Zustand drückt die halbkreisförmig ausgebildete Basis 77 des Betätigungsmittels 12 gegen das im Verschluss- und Abdichtprofil 10 eingesetzte elastische Band 70. Die beiden an die U-förmige Basis anschliessenden Schenkel 78 des Betätigungsmittels 12 befinden sich dabei innerhalb der Schenkel des U-förmig ausgebildeten Verschluss- und Abdichtprofiles 10.

Sowohl die Lasche 81 als auch der elastische Bügel 52 sind dazu bestimmt, dass sich beim Ablassen der Druckluft aus dem elastischen Schlauch 13 letzterer und das Betätigungsmittel 12 zum Entriegeln der beiden vorgängig verschlossenen Teile 6, 7 in das U-förmige Profil 14 zurückziehen.

Jede der bisher beschriebenen Ausführungsformen der erfindungsgemässen Vorrichtung ist so ausgeführt, dass bei einem seitlichen Versatz der beiden Teile 6, 7 durch den Schliessvorgang eine selbständige Zentrierung stattfindet. Der seitliche Versatz der beiden Teile 6, 7 zueinander kann bis zu 45 % der Wandstärke des einen Teiles betragen.

Abschliessend ist in der Fig. 10 eine Vorrichtung dargestellt, die lediglich zum Erreichen einer Abdichtwirkung bestimmt ist. Wie wir uns erinnern, ist eine solche Vorrichtung in der Fig. 1 im gezeigten Ausschnitt des Ecksäulenprofiles 15 dargestellt. Mit 82 sei ein U-förmig ausgebildeter Abschnitt des Querschnittes des Ecksäulenprofiles 15 bezeichnet. In diesem Abschnitt ist ein elastischer Schlauch 16 eingesetzt, der ungefähr mittig zwischen seinem vorderen, mit Zacken versehenen Ende 85 und seinem hinteren, am U-förmigen Abschnitt 82 anstehenden Ende zwei nach innen gebogene Wülste 83 aufweist. Beim Beaufschlagen des Hohlraumes 84 mit Druckluft bewegt sich das mit den Zacken 85 versehene Ende in Richtung einer Seitenfläche je eines der Teile 6, 7 und bewirkt durch das Andrücken an diesen Teilbereich der genannten Seitenflächen ein Abdichten zwischen den Teilen 6, 7 und dem Ecksäulenprofil 15. Die genannten Wülste 83 sind dafür besorgt, dass beim Ablassen der Druckluft aus dem Hohlraum 84 das mit den Zacken versehene Ende 85 des elastischen Schlauches 16 in den U-förmigen Abschnitt 82 des Ecksäulenprofiles 15 zurückgezogen wird.

**Ansprüche**

1. Vorrichtung, insbesondere an einem Lastwagen zum Verschliessen und/oder Abdichten von zwei benachbarten, sich relativ zueinander bewegbaren Teilen (6, 7) eines wenigstens eine Ladepritsche (1), eine Vorderwand (2), eine Rückwand (3) und zwei Seitenwände (4, 5) aufweisenden Lastwagenaufbaues, wobei im geschlossenen Zustand ein Randbereich (8) des einen Teiles (6) zu einem Randbereich (9) des anderen Teiles (7) benachbart ist, dadurch gekennzeichnet, dass im Randbereich (8) des einen Teiles (6) ein sich wenigstens über einen Abschnitt der Länge dieses Randbereiches erstreckendes und parallel zum letzteren verlaufendes Verschluss- und/oder Abdichtprofil (10) vorhanden ist, dass im genannten Randbereich (9) des anderen Teiles (7) eine dem Profil (10) zugewandte, sich etwa über die Länge des Profils erstrekkende, in einem Abstand zu diesem angeordnete Betätigungseinrichtung (11) vorhanden ist und dass ein in der Betätigungseinrichtung (11) angeordnetes Betätigungsmittel zum Verschliessen und/oder Abdichten der beiden Teile (6, 7) an den einander benachbarten Randbereichen (8, 9) gegen das genannte Profil (10) bewegbar ist.

2. Vorrichtung nach Anspruch 1, dadurch gekennzeichnet, dass die Betätigungseinrichtung (11) ein das Betätigungsmittel (12) wenigstens teilweise umfassendes U-förmiges Profil (14) enthält und dass mindestens ein dehnbares Element (13) zum Bewegen des Betätigungsmittels (12) quer zu seiner Längsrichtung in Richtung des Verschluss- und/oder Abdichtprofiles (10) vorhanden ist.

3. Vorrichtung nach Anspruch 2, dadurch gekennzeichnet, dass das dehnbare Element (13) ein in die Betätigungseinrichtung (11) eingesetzter, sich im wesentlichen über die ganze Länge der Betätigungseinrichtung (11) erstreckender elastischer Schlauch ist, der zum Ausführen der Dehnbewegung über ein Steuermittel (18) an eine Druckgasquelle (17), insbesondere an einen Druckluftbehälter, anschliessbar ist.

4. Vorrichtung nach Anspruch 1, dadurch gekennzeichnet, dass zum Erreichen lediglich einer Abdichtwirkung ein elastischer Schlauch (16) als Betätigungsmittel (12) ausgebildet und beim Verbinden über ein Steuermittel (18) mit einer Druckgasquelle (17) durch die Dehnbewegung gegen das Abdichtprofil (10) drückbar ist.

5. Vorrichtung nach Anspruch 4, dadurch gekennzeichnet, dass der Schlauch (16) so ausgebildet ist, dass er mindestens mit einem Teilbereich je einer Seiten- oder Stirnfläche der abzudichtenden Teile (6, 7) zusammenwirkt.

6. Vorrichtung nach Anspruch 3 oder 4, dadurch gekennzeichnet, dass zum Erreichen einer gleichmässigen Dehnbewegung über die ganze Länge des elastischen Schlauches (13, 16) das Steuermittel (18) so ausgebildet ist, dass der Schlauch (13, 16) im wesentlichen stufenweise mit Druckgas beaufschlagbar ist.

7. Vorrichtung nach einem der Ansprüche 1 bis 3, dadurch gekennzeichnet, dass an der dem genannten Verschluss- und/oder Abdichtprofil (10) zugewandten Seite des Betätigungsmittels (12) eine Leiste (69, 72, 73) zum Verschliessen und/oder Abdichten lösbar angeordnet ist.

8. Vorrichtung nach einem der Ansprüche 1 bis 3, dadurch gekennzeichnet, dass das Betätigungsmittel (12) auf der dem genannten Verschluss- und/oder Abdichtprofil (10) zugewandten Seite zum Verschliessen der beiden Teile (6, 7) an den einander benachbarten Randbereichen (8, 9) eine mit dem Profil (10) in Eingriff bringbare komplementäre Form aufweist.

9. Vorrichtung nach Anspruch 8, dadurch gekennzeichnet, dass in der genannten Form des Betätigungsmittels oder im genannten Profil (10) ein Abdichtmittel (33, 55, 70), beispielsweise ein elastisches Band oder Seil angeordnet ist, das im Dehnzustand des dehnbaren Elementes (13), zum Abdichten, an das genannte Profil (10) bzw. an die genannte Form des Betätigungsmittels (12) angedrückt ist.

10. Vorrichtung nach einem der Ansprüche 1 bis 3, dadurch gekennzeichnet, dass mindestens ein auf das U-förmige Profil (14) und das Betätigungsmittel (12) einwirkendes Federmittel (22, 52) zum Zurückführen des Betätigungsmittels (12) in das U-förmige Profil (14) vorhanden ist.

11. Vorrichtung nach Anspruch 10, dadurch gekennzeichnet, dass das Federmittel (22, 52) eine Schraubenfeder (22) oder ein elastischer Bügel (52) ist.

# FIG. 1

EP 0 346 651 A2

# FIG. 3

# FIG. 2

# FIG. 4

FIG. 5

FIG. 6    FIG. 7    FIG. 8

EP 0 346 651 A2

**FIG. 9**

**FIG. 10**